# EUROPÄISCHE PATENTSCHRIFT

(11) **EP 3 092 894 B1**
(45) Veröffentlichungstag und Bekanntmachung des Hinweises auf die Patenterteilung: **26.09.2018**
(21) Anmeldenummer: 16169247.0
(22) Anmeldetag: 11.05.2016
(51) Int. Cl.: A01K 1/035

(54) **HAUSTIERSCHLAFKISSEN**
DOMESTIC ANIMAL SLEEPING CUSHION
COUSSIN POUR ANIMAUX DOMESTIQUES

(30) Priorität: 11.05.2015 DE 202015102389 U
(43) Veröffentlichungstag der Anmeldung: 16.11.2016
(73) Patentinhaber: Pakmas AG, 6052 Hergiswil am See (CH)
(72) Erfinder: Möbius, Peter, 6052 Hergiswil am See (CH)
(74) Vertreter: Pfister & Pfister Patent- und Rechtsanwälte

(56) Entgegenhaltungen:
- WO-A2-2012/112731
- DE-U1- 8 617 064
- DE-U1-202004 013 058
- DE-U1-202011 100 591
- JP-A- 2006 180 793
- US-A- 5 784 995
- US-A- 5 819 347
- US-A1- 2006 272 581
- US-B1- 8 707 485

## Beschreibung

Die Erfindung betrifft ein Kissen für ein Haustier mit einer in einem wulstartigen Rahmen befestigten doppelten Liegefläche mit einer Einlage zwischen beiden Liegeflächen. An der Längsseite einer Liegefläche ist eine verschließbare Öffnung zur Entnahme der Einlage vorgesehen.

In der unbelasteten Gebrauchsstellung ist die obere Liegefläche niedriger angeordnet, wie die obere Wulstoberseite. Die unbelastete Gebrauchsstellung beschreibt dabei den Zustand, bei welchem das Kissen zum Beispiel auf einer horizontalen Fläche ausgelegt ist, aber ein Tier sich noch nicht auf dieses Kissen gelegt hat. Die Anordnung ist dabei so gewählt, dass der Wulst die Liegefläche randartig umgibt, derart, dass insbesondere die obere Wulstoberseite über der Liegefläche ist, und so eine ergonomisch günstige Auflagefläche für den Kopf des Tieres bietet.

Haustierkissen der zur Rede stehenden Art sind in unterschiedlichster Ausführung und Form bekannt. So ist in der Gebrauchsmusterschrift DE 20 2004 013 058 ein Lagerkissen für Haustiere beschrieben, bestehend aus einem die äußere Gestalt des Lagerkissen bestimmenden, textilen Bezug, der zumindest teilweise mit Wärme regulierenden und formbeständigem Füllstoff gefüllt ist, wobei der äußere Bezug des Lagerkissen zwei voneinander getrennte Hohlräume bildet mit einem äußeren Randbereich sowie eine von dem Randbereich zumindest überwiegend umgebene, zentrale Liegefläche und wobei die Füllung der beiden Hohlräume mit solchem Material und solchem Umfang ausgeführt ist, dass die Liegefläche straff gefüllt ist und eine ungefähr gleichmäßige flache Gestalt mit ungefähr gleichmäßiger Dicke und der Randbereich einen im wesentlichen runden bis elliptischen Querschnitt besitzt. Ein derartiges Lagerkissen weist den Nachteil auf, dass es keine Möglichkeit bietet in einfacher Weise unterschiedlichen Temperaturen im Winter und Sommer gerecht zu werden.

In dem US-Patent 5,819,347 ist ein aus drei Schichten flacher, verschließbare Einlagen aufgebautes Kissen beschrieben mit einer Ober-, einer Zwischen- und einer Unterschicht, die jeweils mit unterschiedlichen aromatischen Essenzen angereicherte Füllungen aufweisen können.

Aus der Veröffentlichung US 2006/0272581 A1 geht ein modular aufgebautes Tierkissen in taschen- oder kofferähnlicher Ausgestaltung hervor mit einem stabilen Rahmen, der im Inneren mit Polstermaterial aus gekleidet und mit einer losnehmbaren Abdeckung versehen ist.

In der Gebrauchsmusterschrift DE 20 2011 100 591 U1 ist ein Kissen beschrieben mit einer Kissenhülle aus einlagigem Gewebe oder Überzugsmaterial und einer Kissenfüllung, die wenigstens ein insbesondere verschließbares Aufnahmefach aufweist, in dem wenigstens ein Befestigungselement für ein Einsatzelement vorgesehen ist. Dadurch soll das Kissen sowohl eine orthopädische Stützfunktion entwickeln, wenn ein Mensch oder ein Tier darauf schläft und beispielsweise auch zu einer Muskelentspannung oder Erleichterung der Atmung beitragen entsprechend der medizinischen Ausrüstung des Einsatzelementes.

Aufgabe der Erfindung ist, ein Kissen für ein Haustier zu schaffen, das bedarfsweise sowohl als Sommerkissen als auch Winterkissen verwendet werden kann.

Dies wird erfindungsgemäß durch ein Kissen gemäß Anspruch 1 erreicht. Vorteilhafte Ausgestaltungen sind in den Unteransprüchen beansprucht.

Erfindungsgemäß ist vorgesehen, dass die Öffnung seitlich an der oberen Liegefläche angeordnet ist.

Durch die erfindungsgemäße Ausgestaltung wird vermieden, dass innerhalb der Liegefläche das Verschlussmittel als Quelle von Unannehmlichkeiten für das Haustier vorhanden ist, weil die Öffnung und damit auch das die Öffnung verschließende Verschlussmittel seitlich zur Liegefläche angeordnet sind. Die Liegefläche kann damit vorzugsweise aus einem Stück, beispielsweise aus einem Stück Stoff, Gewebe oder sonstigem Material, und insbesondere ohne Unterbrechungen, Nähte und/oder Verhärtungen ausgeführt sein. Das Haustier wird deshalb die Liegefläche akzeptieren, wobei die Zugänglichkeit der Einlage trotzdem gegeben ist.
Der Pfiff der Erfindung liegt darin, dass das Verschlussmittel, welches Zugang zu der Öffnung ermöglicht, an der oberen Liegefläche angeordnet ist und, falls sich ein Haustier auf dem Kissen niederlässt und seinen Kopf auf den Wulst legt, der herunter gedrückte Wulst genau den Bereich der Öffnung mit verdrängtem Wulstmaterial zusätzlich überdeckt und eine Beeinträchtigung des Liegekomforts durch das harte Verschlussmittel zusätzlich vermieden ist.
Es sei verstanden, dass unter einem Kissen beispielsweise grundsätzlich jede Art von Unterlage zum Liegen, Schlafen oder Sitzen verstanden werden kann. Unter einem Haustier sei insbesondere ein Tier verstanden, welches üblicherweise in Europa in Privathaushalten und insbesondere in Wohngebäuden gehalten wird, und zwar vor allem ein vierbeiniges, nicht flugfähiges und nicht im Wasser lebendes sowie nicht in Terrarien gehaltenes Tier, insbesondere also Wirbeltiere wie Hund oder Hauskatze. Es kann dabei auch von Heimtieren gesprochen werden. Die Eignung für ein solches Haustier wird sich an einem Kissen typischerweise problemlos erkennen lassen.

Eine Liegefläche ist typischerweise aus einem durchgängigen Material wie Stoff, Gewebe, Kunststoff oder einem anderen Material ausgebildet.

Der wulstartige Rand dient insbesondere einer gewissen Fixierung des auf dem Kissen schlafenden Tieres. Es kann insbesondere eine Mulde ausgebildet sein, welche durch den wulstartigen Rand begrenzt wird, und in welcher sich die Liegefläche befindet.

Der wulstartige Rand kann aus dem gleichen oder einem anderen Material wie die Liegefläche ausgebildet sein.
Die Öffnung dient insbesondere dazu, die Einlage entnehmen zu können, beispielsweise um sie zu reinigen oder um sie auszutauschen, wenn sie durchgelegen ist. Außerdem ist es möglich, unterschiedliche Einlagen für ein bestimmtes Kissen vorzusehen, um unterschiedliche Härtegrade durch einfachen Austausch der Einlagen realisieren zu können.

Gemäß der Erfindung ist vorgesehen, dass die Öffnung zwischen der oberen Liegefläche und dem wulstartigen Rand angeordnet ist. Damit befindet sich die Öffnung an einer Stelle, welche ohnehin Unebenheiten aufweist, so dass die Öffnung und insbesondere das Verschlussmittel nicht mehr ins Gewicht fallen und/oder nicht oder kaum spürbar sind.
In einer bevorzugten Ausgestaltung des Vorschlages ist vorgesehen, dass das Verschlussmittel derart angeordnet ist, dass auch bei vollständig geöffnetem Verschlussmittel die obere Liegefläche an dem Kissen verbleibt. Die Anordnung ist so gewählt, dass durch die eingesetzten Verschlussmittel sowohl die Einlage an der Liegefläche, als auch die Einlage des Wulstes entfernt werden können und dann der gesamte Bezug im Ganzen gewaschen bzw. gereinigt werden kann. Es reicht daher aus, die Öffnung so zu wählen, dass die darunter befindliche Einlage entnommen werden kann, dies reduziert die Länge des Verschlussmittels und damit auch mögliche Störquellen für die Behaglichkeit des auf dem Kissen liegenden Haustieres. Gemäß einer Ausführung ist vorgesehen, dass die obere Liegefläche eine erste Längsseite und eine zweite Längsseite aufweist, welche gegenüberliegend und zueinander parallel sind, wobei die Öffnung entlang einer der Längsseiten angeordnet ist. Dies ermöglicht eine ausreichende Länge der Öffnung, um die Einlage zu entnehmen. Außerdem wird durch die Anordnung an einer Längsseite eine gerade Ausführung der Öffnung ermöglicht, wodurch das Öffnen des Verschlussmittels erleichtern werden kann.
Gemäß einer Ausführung ist vorgesehen, dass das Verschlussmittel ein Reißverschluss ist. Dies erlaubt ein zuverlässiges Verschließen und ein einfaches Öffnen.
Gemäß einer Ausführung ist vorgesehen, dass das Verschlussmittel ein Klettverschluss ist. Auch dies erlaubt ein zuverlässiges Verschließen und ein einfaches Öffnen.
Gemäß einer Ausführung ist vorgesehen, dass die Einlage aus einem elastischen und/oder kompressiblen Material, insbesondere Schaumstoff, ausgebildet ist. Dies erlaubt ein weiches Gefühl beim Legen auf das Kissen, was die Akzeptanz des Kissens bei Haustieren deutlich erhöht.

Gemäß der Erfindung ist vorgesehen, dass das Kissen ferner eine untere Liegefläche für das Haustier aufweist, welche in eine zur oberen Liegefläche entgegengesetzte Richtung weist. Mittels einer solchen unteren Liegefläche kann eine weitere Liegefläche des Kissens vorgesehen werden. Diese kann beispielsweise verwendet werden, wenn die obere Liegefläche verschmutzt ist. Außerdem können die beiden Liegeflächen unterschiedlich ausgebildet sein, beispielsweise aus unterschiedlichen Materialien ausgebildet sein oder unterschiedlich überzogen sein, beispielsweise um für unterschiedliche Temperaturen oder Jahreszeiten vorgesehen zu sein. Beispiele hierzu werden weiter unten gegeben.
Gemäß einer Ausführung ist vorgesehen, dass die untere Liegefläche parallel zur oberen Liegefläche ausgerichtet ist. Dies entspricht einer einfachen und praktikablen Ausführung.

Gemäß einer Ausführung ist vorgesehen, dass der wulstartige Rand um die untere Liegefläche umläuft. Auch damit kann beispielsweise eine Mulde gebildet werden.
Gemäß einer Ausführung ist vorgesehen, dass die untere Liegefläche unlösbar mit dem wulstartigen Rand verbunden ist. Dies erlaubt eine stabile und einfach herzustellende Ausführung. Die Entnehmbarkeit der Einlage ist dabei typischerweise über die Öffnung gesichert.
Es sei verstanden, dass unter einer unlösbaren Verbindung typischerweise eine Verbindung verstanden sei, welche nicht für ein schnelles Lösen vorgesehen ist, also insbesondere kein Verschlussmittel wie Reiß- oder Klettverschlüsse aufweist. Eine unlösbare Verbindung kann beispielsweise durch eine Naht ausgebildet werden, welche zwar mit entsprechendem Aufwand lösbar ist, jedoch nicht dafür vorgesehen ist.

Gemäß der Erfindung ist vorgesehen, dass der wulstartige Rand über die untere Liegefläche hervorsteht. Dies erlaubt beispielsweise in vorteilhafter Weise das Ausbilden der weiter oben beschriebenen Mulde.
Gemäß einer Ausführung ist vorgesehen, dass die obere Liegefläche und/oder die untere Liegefläche eben sind. Dies entspricht einer praktikablen Ausführung, welche üblicherweise zu einer hohen Akzeptanz bei Haustieren führt. Die jeweilige Liegefläche kann auch leicht gebogen sein.
Gemäß einer Ausführung ist vorgesehen, dass eine der beiden Liegeflächen, bevorzugt die obere Liegefläche, mit einem Gewebe oder einem Gewirk, insbesondere Plüsch, überzogen ist. Damit kann eine spezielle Haptik und/oder Charakteristik der Liegefläche erreicht werden. Beispielsweise kann eine solche mit Plüsch überzogene Liegefläche für kalte Temperaturen vorgesehen sein.

Gemäß einer Ausführung ist vorgesehen, dass ein Abschnitt des wulstartigen Rands, welcher an diejenige Liegefläche angrenzt, welche mit einem Gewebe oder Gewirk, insbesondere Plüsch, überzogen ist, ebenfalls mit dem Gewebe oder Gewirk, insbesondere Plüsch, überzogen ist. Damit erstreckt sich die Haptik und/oder Charakteristik auch auf den Rand. Dieser Abschnitt kann beispielsweise die Hälfte des Rands einnehmen. Er kann sich insbesondere von der Liegefläche bis zu einer umlaufenden Linie erstrecken.

Gemäß einer Ausführung ist vorgesehen, dass um den wulstartigen Rand ein umlaufendes Verschlussmittel, insbesondere ein umlaufender Reißverschluss, ausgebildet ist, wobei bei Öffnung des umlaufenden Verschlussmittels das Innere des wulstartigen Rands zugänglich ist. Damit kann auch ein Material im Inneren des Rands in gleicher oder ähnlicher Weise entnommen werden wie die Einlage, beispielsweise zum Reinigen oder Austauschen.

Gemäß einer Ausführung ist vorgesehen, dass der wulstartige Rand mit einer Füllung, insbesondere aus elastischem und/oder kompressiblem Material, insbesondere Schaumstoff, gefüllt ist. Damit kann eine weiche Charakteristik, ähnlich wie bei der Einlage, vorgesehen werden.

Gemäß einer Ausführung ist vorgesehen, dass die Füllung schlauchförmig ausgeführt ist. Dies ermöglicht ein anliegendes Umlaufen um die Liegefläche. Die Schlauchform kann insbesondere an einer oder mehreren Stellen unterbrochen sein, um ein Herausnehmen zu erleichtern. Beispielsweise kann sie an einer, zwei, drei, vier oder fünf Stellen unterbrochen sein.

Gemäß einer Ausführung ist vorgesehen, dass die Einlage zwischen der oberen Liegefläche und der unteren Liegefläche angeordnet ist. Damit kann die Wirkung der Einlage für beide Liegeflächen erzielt werden, insbesondere also das Vorsehen einer weichen Unterlage. Insbesondere können beide Liegeflächen unmittelbar an die Einlage angrenzen.

Gemäß einer Ausführung ist vorgesehen, dass bei Auflage des wulstartigen Rands auf eine ebene Oberfläche die untere Liegefläche oder die obere Liegefläche von der ebenen Oberfläche beabstandet ist. Damit kann eine zusätzliche Federwirkung aufgrund des Abstands erzielt werden. Wenn sich ein Haustier auf das Kissen legt, wird die Einlage typischerweise nach unten gedrückt und eine Mulde wird dadurch noch vergrößert.

Gemäß einer Ausführung ist vorgesehen, dass das Kissen derart ausgebildet ist, dass es einfach gewendet werden kann, so dass sowohl die obere Liegefläche, wie auch die untere Liegefläche nach oben weisen kann und somit als Liegefläche für das Haustier dienen kann.

In der Zeichnung ist die Erfindung insbesondere in einem Ausführungsbeispiel schematisch dargestellt. Es zeigen:
- Fig. 1: eine Draufsicht auf ein erfindungsgemäßes Kissen,
- Fig. 2: eine seitliche Schnittansicht des Kissens,
- Fig. 3: eine andere seitliche Schnittansicht des Kissens.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

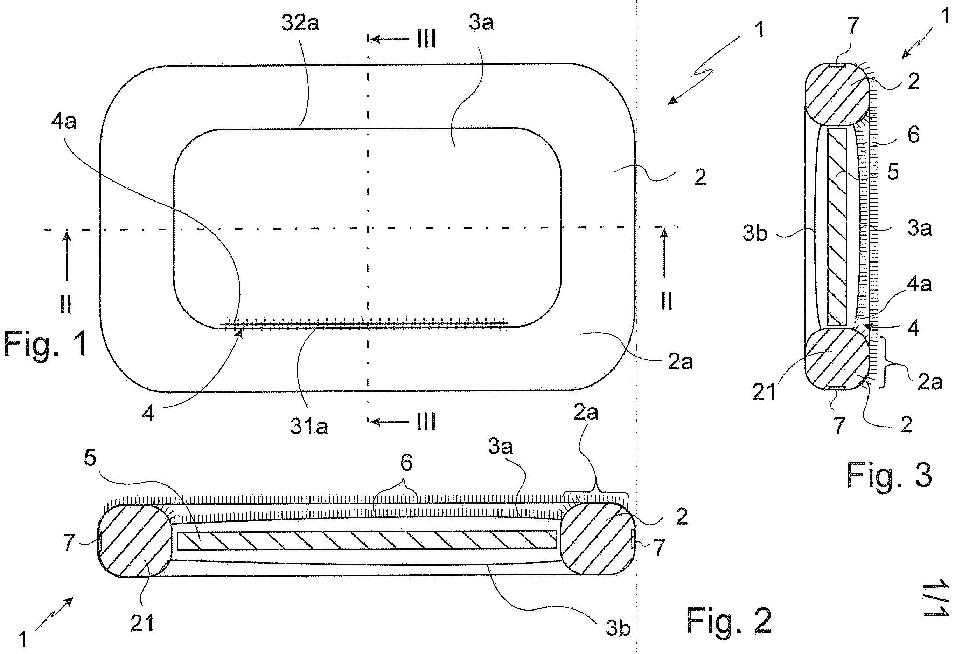

Figur 1 zeigt ein erfindungsgemäßes Kissen 1 für ein Haustier gemäß einem Ausführungsbeispiel.

Das Kissen 1 weist einen wulstartigen Rand 2 auf. Dieser umgibt eine obere Liegefläche 3a. Die obere Liegefläche 3a ist dazu ausgebildet, dass sich ein Haustier darauf legen kann, insbesondere zum Schlafen.

Die Liegefläche 3a weist eine erste Längsseite 31a und eine zweite Längsseite 32a auf. Unter anderem an diesen Längsseiten 31a, 32a grenzt die obere Liegefläche 3a an den wulstartigen Rand 2 an.

Entlang der ersten Längsseite 3a ist eine Öffnung 4 ausgebildet. Diese ist dazu vorgesehen, eine innerhalb des Kissens 1 befindliche, weiter unten beschriebene Einlage zu entnehmen. Die Öffnung 4 ist mittels eines Verschlussmittels in Form eines Reißverschlusses 4a verschließbar. Der Reißverschluss 4a ist dabei in bekannter Art und Weise ausgebildet. Er kann zum Entnehmen der Einlage geöffnet und beispielsweise nach Entnahme oder Austausch der Einlage wieder verschlossen werden.

Durch die Anordnung des Reißverschlusses 4a entlang der ersten Längsseite 31a wird eine Beeinträchtigung des Komforts beim Liegen auf der oberen Liegefläche 3a vermieden. Der Reißverschluss 4a befindet sich an der Grenzlinie zwischen oberer Liegefläche 3a und Rand 2, an welcher ohnehin eine Unebenheit auftritt, welche jedoch gewollt ist. Auf diese Weise stört der Reißverschluss 4a nicht, insbesondere nicht beim Liegen.

Figur 2 zeigt eine seitliche Schnittansicht durch das Kissen 1 entlang der in Figur 1 eingezeichneten Linie II-II. Dabei ist zu erkennen, dass der umlaufende Rand/Wulst 2 über die obere Liegefläche 3a hervorsteht. Somit bildet sich eine Mulde in dem Kissen 1, in welche sich das Haustier bequem und seitlich durch den Rand 2 abgestützt legen kann. Der Rand/Wulst 2 ist anders ausgedrückt wulstartig ausgebildet. Mit dem Bezugszeichen 2a ist die obere Wulstoberfläche des Wulstes des bzw. Randes 2 gekennzeichnet. Figur 2 zeigt die unbelastete Gebrauchsstellung im Schnitt. Es ist gut zu erkennen, dass die obere Wulstoberseite 2a über der oberen Liegefläche 3a liegt, bzw. die obere Liegefläche 3a niedriger angeordnet ist, als die obere Wulstoberseite 2a. Die gleiche Situation ergibt sich natürlich auch in Figur 3.

Des Weiteren ist in Figur 2 zu erkennen, dass das Kissen 1 nicht nur die obere Liegefläche 3a aufweist, sondern auch eine untere Liegefläche 3b. Die untere Liegefläche 3b weist dabei in eine zur oberen Liegefläche 3a entgegengesetzte Richtung, wie dies in Figur 2 dargestellt ist.

In der in den Figuren dargestellten Lage befindet sich die obere Liegefläche 3a oben und die untere Liegefläche 3b befindet sich unten. Legt sich ein Haustier auf das Kissen 1, so legt es sich folglich auf die obere Liegefläche 3a. Es sei jedoch verstanden, dass das Kissen 1 auch umgedreht werden kann, so dass die untere Liegefläche 3b oben liegt und sich ein Haustier auf diese untere Liegefläche 3b legen würde. Tatsächlich wird bei einer typischen Ausführungsform in der Praxis eine eindeutige Zuordnung von unterer und oberer Liegefläche im Regelfall nicht möglich sein, insbesondere wenn beide Liegefläche 3a, 3b zur Verwendung als Liegefläche für ein Haustier ausgebildet sind.

Des Weiteren ist in Figur 2 zu erkennen, dass die obere Liegefläche 3a mit einem Gewebe in Form von Plüsch 6 überzogen ist. Dieser Plüsch 6 sorgt dafür, dass die obere Liegefläche 3a etwas weicher und insbesondere wärmender als die untere Liegefläche 3b ausgeführt ist, welche nicht mit einem solchen Plüsch 6 überzogen ist. Dadurch kann insbesondere die obere Liegefläche 3a bei kälteren Temperaturen verwendet werden, wohingegen die untere Liegefläche 3b bei wärmeren Temperaturen verwendet werden kann. Es sei verstanden, dass typischerweise ein Mensch auswählt, welche der beiden Liegefläche 3a, 3b oben liegen soll und damit dem Haustier eine passende Liegefläche bereitstellt.

Wie in Figur 2 weiter zu erkennen ist, erstreckt sich der Plüsch 6 auch auf an die obere Liegefläche 3a angrenzende Bereiche des Rands 2. Damit wird an dem Rand 2 eine ähnliche Haptik und Wärmewirkung erreicht.

Außerdem ist in Figur 2 zu erkennen, dass sich zwischen den beiden Liegeflächen 3a, 3b eine Einlage 5 befindet. Diese ist aus elastischem Schaumstoff ausgebildet und dient somit dazu, eine weiche Auflage auf die Liegeflächen 3a, 3b zu ermöglichen. Anders ausgedrückt wird die Einlage 5 zusammengedrückt, wenn sich das Haustier auf das Kissen 1 legt. Dies erhöht die Akzeptanz eines solchen Kissens bei Haustieren deutlich.

Die Einlage 5 kann durch die Öffnung 4 entnommen werden. Hierzu wird zunächst der Reißverschluss 4a geöffnet. Dadurch wird die Einlage 5 zugänglich. Die Einlage kann insbesondere entnommen werden, um sie zu reinigen oder um sie gegen eine andere zu ersetzen, beispielsweise wenn ein anderer Härtegrad gewünscht ist oder wenn sie durchgelegen oder beschädigt ist.

Nachdem eine neue Einlage 5 oder die Einlage 5, beispielsweise nach Reinigung, eingelegt wurde, wird typischerweise der Reißverschluss 4a wieder geschlossen. Damit wird verhindert, dass sich die obere Liegefläche 3a entlang der ersten Längsseite 31a von dem Rand 2 löst. Außerdem wird ein direkter Kontakt zu der Einlage 5 verhindert, was beispielsweise Verschmutzungen verhindern kann.

Des Weiteren ist in Figur 2 zu erkennen, dass der Rand 2 mit einer Füllung 21 gefüllt ist. Diese ist schlauchförmig ausgeführt. Sie ist vorliegend aus dem gleichen Material wie die Einlage 5 ausgeführt, also aus einem elastischen Schaumstoff. Damit bietet auch der Rand 2 eine gewisse Nachgiebigkeit, was den Komfort des Haustiers beim Liegen auf dem Kissen 1 deutlich erhöht.

In dem Rand 2 ist ein umlaufendes Verschlussmittel 7 ausgebildet, welches ebenfalls als Reißverschluss ausgeführt ist. Dieser kann geöffnet werden, um die Füllung 21 zu entnehmen, beispielsweise zum Austausch oder zur Reinigung. Zu diesem Zweck ist die Schlauchform der Füllung 21 an vorliegend einer Stelle unterbrochen, so dass die Füllung 21 leichter entnommen werden kann. Es sei verstanden, dass sie beispielsweise auch an zwei oder drei Stellen unterbrochen sein könnte.

Figur 3 zeigt eine seitliche Schnittansicht durch das Kissen 1 entlang der in Figur 1 eingezeichneten Linie III-III. Dabei ist zu erkennen, dass das Kissen 1 in der gezeigten Schnittansicht eine deutlich kleinere Seitenlänge aufweist als in der Schnittansicht von Figur 2.

In Figur 3 ist auch gut zu erkennen, dass die Öffnung 4 mit ihrem Reisverschluss 4a unmittelbar zwischen der oberen Liegefläche 3a und dem Rand 2 ausgebildet ist. Dadurch wird eine Verminderung der Liegequalität verhindert, welche sich insbesondere dann ergeben würde, wenn die Öffnung 4 mittig in der oberen Liegefläche 3a ausgebildet wäre.
Sowohl in Figur 2 wie auch in Figur 3 ist gut zu erkennen, dass der Rand 2 über sowohl die obere Liegefläche 3a wie auch die untere Liegefläche 3b jeweils hervorsteht, so dass eine jeweilige Mulde gebildet wird. Dies verhindert, dass ein auf dem Kissen 1 liegendes Haustier über den Rand 2 des Kissens hinausfällt, auch wenn es beispielsweise schläft.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.
Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

## Patentansprüche

1. Kissen für ein Haustier, aufweisend
- eine obere Liegefläche (3a) für das Haustier,
- einen wulstartigen Rand (2) mit einer oberen Wulstoberseite (2a), welcher um die obere Liegefläche (3a) umläuft, und in der unbelasteten Gebrauchsstellung die obere Liegefläche (3a) niedriger angeordnet ist, als die obere Wulstoberseite (2a)
- eine Einlage (5), welche unterhalb der oberen Liegefläche (3a) angeordnet ist, und
- eine Öffnung (4) zur Entnahme der Einlage (5), wobei die Öffnung (4) mittels eines Verschlussmittels (4a) verschließbar ist,
**dadurch gekennzeichnet, dass**
die Öffnung (4) seitlich an der oberen Liegefläche (3a) angeordnet ist und die Öffnung (4) zwischen der oberen Liegefläche (3a) und dem wulstartigen Rand (2) angeordnet ist und das Kissen (1) ferner eine untere Liegefläche (3b) für das Haustier aufweist, welche in eine zur oberen Liegefläche (3a) entgegengesetzte Richtung weist und der wulstartige Rand (2) über die untere Liegefläche (3b) hervorsteht.

2. Kissen nach einem der vorhergehenden Ansprüche, **dadurch gekennzeichnet, dass** das Verschlussmittel (4a) derart angeordnet ist, dass auch bei vollständig geöffnetem Verschlussmittel (4a) die obere Liegefläche (3a) an dem Kissen verbleibt.

3. Kissen nach einem der vorhergehenden Ansprüche, **dadurch gekennzeichnet, dass** die obere Liegefläche (3a) eine erste Längsseite (31a) und eine zweite Längsseite (32a) aufweist, welche gegenüberliegend und zueinander parallel sind, wobei die Öffnung (4) entlang einer der Längsseiten (31a, 32a) angeordnet ist.

4. Kissen nach einem der vorhergehenden Ansprüche, **dadurch gekennzeichnet, dass** das Verschlussmittel (4a) ein Reißverschluss oder ein Klettverschluss (5) ist.

5. Kissen nach einem der vorhergehenden Ansprüche, **dadurch gekennzeichnet, dass** die Einlage (5) aus einem elastischen und/oder kompressiblen Material, insbesondere Schaumstoff, ausgebildet ist.

6. Kissen nach einem der vorhergehenden Ansprüche, **dadurch gekennzeichnet, dass** die untere Liegefläche (3b) parallel zur oberen Liegefläche (3a) ausgerichtet ist und/oder der wulstartige Rand (2) um die untere Liegefläche (3b) umläuft.

7. Kissen nach einem der vorhergehenden Ansprüche, **dadurch gekennzeichnet, dass** die untere Liegefläche (3b) unlösbar mit dem wulstartigen Rand (2) verbunden ist und/oder die obere Liegefläche (3a) und/oder die untere Liegefläche (3b) eben ist.

8. Kissen nach einem der vorhergehenden Ansprüche, **dadurch gekennzeichnet, dass** eine der beiden Liegeflächen (3a, 3b), bevorzugt die obere Liegefläche (3a), mit einem Gewebe oder einem Gewirk, insbesondere Plüsch (6), überzogen ist und/oder ein Abschnitt des wulstartigen Rands (2), welcher an diejenige Liegefläche (3a) angrenzt, welche mit einem Gewebe oder Gewirk, insbesondere Plüsch (6) überzogen ist, ebenfalls mit dem Gewebe oder Gewirk, insbesondere Plüsch (6), überzogen ist.

9. Kissen nach einem der vorhergehenden Ansprüche, **dadurch gekennzeichnet, dass** um den wulstartigen Rand (2) ein umlaufendes Verschlussmittel (7), insbesondere ein umlaufender Reisverschluss, ausgebildet ist, wobei bei Öffnung des umlaufenden Verschlussmittels (7) das Innere des wulstartigen Rands (2) zugänglich ist und/oder der wulstartige Rand (2) mit einer Füllung (21) aus elastischem und/oder kompressiblem Material, insbesondere Schaumstoff, gefüllt ist.

10. Kissen nach einem der vorhergehenden Ansprüche, **dadurch gekennzeichnet, dass** die Füllung (21) schlauchförmig ausgeführt ist.

11. Kissen nach einem der vorhergehenden Ansprüche, **dadurch gekennzeichnet, dass** die Einlage (5) zwischen der oberen Liegefläche (3a) und der unteren Liegefläche (3b) angeordnet ist.

12. Kissen nach einem der vorhergehenden Ansprüche, **dadurch gekennzeichnet, dass** bei Auflage des wulstartigen Rands (2) auf eine ebene Oberfläche die untere Liegefläche (3b) oder die obere Liegefläche (3a) von der ebenen Oberfläche beabstandet ist.

## Claims

1. A cushion for a domestic animal with
- an upper resting surface (3a) for the domestic animal,
- a bulging edge (2) with an upper bulge surface (2a) circulating around the upper resting surface (3a), and in the nonleaded use position the upper resting surface (3a) is arranged lower than the upper bulge surface (2a)
- a wadding (5) arranged below the upper resting surface (3a), and
- an opening (4) for removing the wadding (5), wherein the opening (4) can be closed by means of a fastener (4a),
**characterized in that**
the opening (4) is arranged laterally at the upper resting surface (3a), and the opening (4) is arranged be tween the upper resting surface (3a) and the bulging edge (2), and furthermore the cushion (1) has a lower resting surface (3b) for the pet pointing in a direction opposite to the upper resting surface (3a), and the bulging edge (2) projects beyond the lower resting surface (3b).

2. The cushion according to one of the preceding claims, **characterized in that** the fastener (4a) is arranged such that even if the fastener (4a) is completely opened, the upper resting surface (3a) remains at the cushion.

3. The cushion according to one of the preceding claims, **characterized in that** the upper resting surface (3a) has a first longitudinal side (31a) and a second longitudinal side (32a) both being opposing and parallel to each other, wherein the opening (4) is arranged along one of the longitudinal sides (31a, 32a).

4. The cushion according to one of the preceding claims, **characterized in that** the fastener (4a) is a zipper or a Velcro fastener (5).

5. The cushion according to one of the preceding claims, **characterized in that** the wadding (5) is formed of elastic and/or compressible material, in particular foam material.

6. The cushion according to one of the preceding claims, **characterized in that** the lower resting surface (3b) is orientated parallel to the upper resting surface (3a), and/or the bulging edge (2) circulates around the lower resting surface (3b).

7. The cushion according to one of the preceding claims, **characterized in that** the lower resting surface (3b) is connected non-releasably with the bulging edge (2), and/or the upper resting surface (3a) and/or the lower resting surface (3b) are plane.

8. The cushion according to one of the preceding claims, **characterized in that** one of both resting surfaces (3a, 3b), preferably the upper resting surface (3a) is covered with a fabric or a knitted fabric, in particular plush (6), and/or a section of the bulging edge (2) adjoining the resting surface (3a) that is covered with fabric or knitted fabric, in particular plush (6), is also covered with the fabric, knitted fabric, in particular plush (6).

9. The cushion according to one of the preceding claims, **characterized in that** around the bulging edge (2) a circulating fastener (7), in particular a circulating zipper, is formed, wherein, when the circulating fastener (7) is opened the interior of the bulging edge (2) is accessible, and/or the bulging edge (2)is filled with a filling (21) of elastic and/or compressible material, in particular foam material.

10. The cushion according to one of the preceding claims, **characterized in that** the filling (21) is designed hose-like.

11. The cushion according to one of the preceding claims, **characterized in that** the wadding (5) is arranged between the upper resting surface (3a) and the lower resting surface (3b).

12. The cushion according to one of the preceding claims, **characterized in that** when the bulging edge (2) rests on a plane surface, the lower resting surface (3b) or the upper resting surface (3a) is spaced from the plane surface.

## Revendications

1. Coussin pour animaux domestiques, comportant:
- une face de couchage supérieure (3a),
- un bord boursoufflé (2), possédant une face supérieure (2a) de la boursoufflure, en périphérique de la face de couchage supérieure (3a) configurées de façon à ce que la face de couchage supérieure (3a) est située en-dessous de la surface supérieure (2a) de la boursoufflure en état d'utilisation hors charge,
- un rembourrage (5) situé en-dessous de la face de couchage supérieure (3a)
- et une ouverture (4) destinée à l'enlèvement de l'entoilage (5) et pouvant être fermée à l'aide d'un moyen de fermeture (4a),
**caractérisé en ce que** l'ouverture (4) est située latéralement au niveau de la face de couchage supérieure (3a) et **en ce que** l'ouverture (4) est située entre la face de couchage supérieure (3a) et le bord boursoufflé (2) et **en ce que** le coussin (1) comporte en plus une face de couchage inférieure (3b) pour l'animal domestique orientée en direction opposée à celle de la face de couchage supérieure (3a) et **en ce que** le bord boursoufflé (2) dépasse la face de couchage inférieure (3b).

2. Coussin selon la revendication précédente, **caractérisé en ce que** le moyen de fermeture (4a) est situé de façon à ce que la face de couchage supérieure (3a) reste attachée au coussin même lors d'une ouverture complète du moyen de fermeture (4a).

3. Coussin selon une des revendications précédentes, **caractérisé en ce que** la face de couchage supérieure (3a) comporte un premier côté latéral (31a) et un deuxième côté latéral (32a), l'un étant opposé à l'autre et parallèle et configuré de façon à ce que l'ouverture (4) est située le long d'un des deux côté latéraux (31a, 32a).

4. Coussin selon l'une des revendications précédentes, **caractérisé en ce que** le moyen de fermeture (4a) est une fermeture éclair ou une fermeture de type velcro.

5. Coussin selon une des revendications précédentes, **caractérisé en ce que** le rembourrage (5) est réalisé en une matière élastique et/ou compressible, en particulier en mousse plastique.

6. Coussin selon une des revendications précédentes, **caractérisé en ce que** la face de couchage inférieure (3b) est orientée parallèlement à la face de couchage supérieure (3a) et/ou **en ce que** le bord boursoufflé (2) entoure la face de couchage inférieure (3b).

7. Coussin selon une des revendications précédentes, **caractérisé en ce que** la face de couchage inférieure (3b) est attachée au bord boursoufflé (2) de façon permanente et/ou **en ce que** la face de couchagesupérieure (3a) et/ou la face de couchage inférieure (3b) est(sont) plane(s).

8. Coussin selon une des revendications précédentes, **caractérisé en ce qu**'une des deux faces de couchage (3a, 3b), de préférence la face de couchage supérieure (3a) est recouverte d'un tissu ou d'un textile, en particulier de peluche (6) et/ou en ce qu'une section du bord boursoufflé (2) voisinant avec la face de couchage (3a) qui est recouverte d'un tissu ou d'un textile et en particulier de peluche (6) est également recouverte par un tissu ou un textile et en particulier de peluche (6) .

9. Coussin selon une des revendications précédentes, **caractérisé en ce qu**'un moyen de fermeture périphérique (7) entoure le bord boursoufflé (2), en particulier une fermeture éclair périphérique de façon à ce que l'ouverture de ce moyen de fermeture périphérique (7) permet d'atteindre l'intérieur du bord boursoufflé (2) et/ou en ce que le bord boursoufflé (2) est rempli par un rembourrage (21) en un matériau élastique et/ou compressible, en particulier en mousse plastique.

10. Coussin selon une des revendications précédentes, **caractérisé en ce que** le rembourrage (21) possède une forme de tuyau.

11. Coussin selon une des revendications précédentes, **caractérisé en ce que** le rembourrage (5) est situé entre la face de couchage supérieure (3a) et la face de couchage inférieure (3b).

12. Coussin selon une des revendications précédentes, **caractérisé en ce que** lors de la mise en place du bord boursoufflé (2) sur une surface plane, la face de couchage supérieure (3a) ou la face de couchage inférieure (3b) restent espacées de cette surface plane.
